# EUROPEAN PATENT APPLICATION

(11) **EP 3 301 619 A1**
(43) Date of publication of application: **04.04.2018**
(21) Application number: 17192332.9
(22) Date of filing: 21.09.2017
(51) Int. Cl.: G06Q 10/02, G06Q 50/12, G06Q 50/14

(54) **METHOD AND DEVICE FOR GATHERING TRAVEL INFORMATION FROM DIFFERENT SERVICE PROVIDERS**

(30) Priority: 29.09.2016 JP 2016191896
(71) Applicant: FUJITSU LIMITED, Kanagawa 211-8588 (JP)
(72) Inventor: Matsumoto, Yasuhide, Kanagawa, 211-8588 (JP)
(74) Representative: Hoffmann Eitle

(57) **Abstract**

A method for gathering information, includes, receiving a request for a service, the request including a required condition for the service, dividing the required condition into a plurality of divided conditions, specifying a first service provider from among a plurality of service providers, the first service provider providing a first service for which a first divided condition included in the plurality of divided conditions is required, transmitting the first divided condition to a first device of the first service provider, and receiving first information regarding a response to the first divided condition from the first device.

## Description

### TECHNICAL FIELD

The embodiments discussed herein are related to technology of gathering information.

### BACKGROUND ART

To date, services for assisting in making travel reservations and creating travel plans have been provided. For example, systems have been proposed for providing users with services that are requested via user terminal devices to a service center of an intelligent transport system (ITS) by linking the service systems of travel content companies and the service systems of airline companies, and the like.

Also, systems have been proposed for searching for service providers that satisfy a condition demanded by a customer via the Internet, and selecting and notifying of the service providers that satisfy the condition demanded by the customer.

Technologies relating to this are disclosed in Japanese Laid-open Patent Publication No. 2001-188835 and Japanese Laid-open Patent Publication No. 2008-159010, for example.

### SUMMARY

### TECHNICAL PROBLEM

Currently, sharing services in which intermediation is performed when a plurality of people share various resources, such as automobiles, vacant rooms, clothes, manpower and abilities, funds, or the like, or when lending and borrowing are carried out between individuals have been widespread. Service providing systems, such as these sharing services are independently operated in their own ways. Accordingly, for example, when a user wants to use a plurality of service providing systems regarding an event, such as a travel, or the like, the user has to carry out procedures, such as making reservations for the individual systems by separately specifying the conditions, and the like.

### SOLUTION TO PROBLEM

According to an aspect of the invention, a method for gathering information, includes, receiving a request for a service, the request including a required condition for the service, dividing the required condition into a plurality of divided conditions, specifying a first service provider from among a plurality of service providers, the first service provider providing a first service for which a first divided condition included in the plurality of divided conditions is required, transmitting the first divided condition to a first device of the first service provider, and receiving first information regarding a response to the first divided condition from the first device.

### ADVANTAGEOUS EFFECTS OF INVENTION

It is possible to link a plurality of sharing service systems and to provide services.

### BRIEF DESCRIPTION OF DRAWINGS

FIG. 1 is a block diagram illustrating a schematic configuration of a linkage control system according to first to third embodiments;
FIG. 2 is a functional block diagram of a linkage control apparatus according to the first to the third embodiments;
FIG. 3 is a diagram illustrating an example of a table in which a type for each sharing service is stored;
FIG. 4 is a block diagram illustrating a schematic configuration of a computer that functions as a linkage control apparatus according to the first to the third embodiments;
FIG. 5 is a flowchart illustrating an example of linkage control processing in the first embodiment;
FIG. 6 is a diagram for explaining acquisition and provision of a matching result in the first embodiment;
FIG. 7 is a flowchart illustrating an example of linkage control processing in the second embodiment;
FIG. 8 is a diagram for explaining acquisition and provision of a matching result in the second embodiment; and
FIG. 9 is a flowchart illustrating an example of linkage control processing in the third embodiment.

### DESCRIPTION OF EMBODIMENTS

In the following, detailed descriptions will be given of embodiments according to the present disclosure with reference to the drawings.

### First embodiment

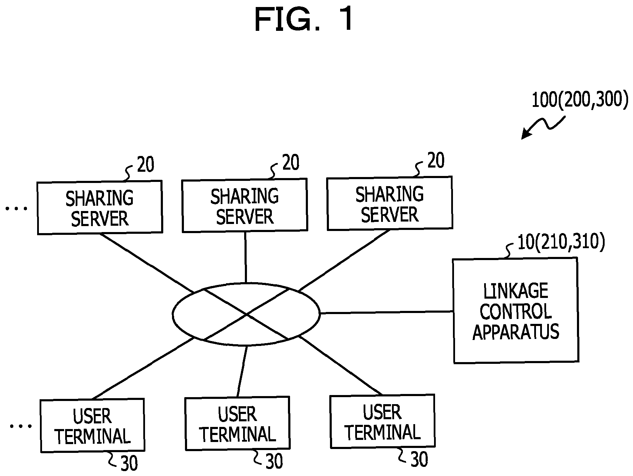

As illustrated in FIG. 1, a linkage control system 100 according to a first embodiment includes a linkage control apparatus 10, a plurality of sharing servers 20, and a plurality of user terminals 30. The linkage control apparatus 10, each of the sharing servers 20, and each of the user terminals 30 are coupled via a network, such as the Internet, or the like. In this regard, the number of sharing servers 20 and the number of user terminals 30 are not limited to the example in FIG. 1.

The sharing servers 20 are devices that provide sharing services. For example, it is possible to realize the sharing servers 20 by information processing devices, such as server devices, personal computers, or the like. Sharing services are services that carry out intermediation when a plurality of people share various resources, such as automobiles, vacant rooms, clothes, manpower and abilities, funds, or the like, or when lending and borrowing are carried out between individuals. In this embodiment, a description will be given of the case where a plurality of sharing servers 20 include the servers 20 that provide the same type of sharing services and the servers 20 that provide different types of sharing services. For example, a plurality of certain sharing servers 20 provide sharing services of allocation of cars, such as Uber, or the like, and a plurality of the other sharing servers 20 provide sharing services of accommodations, such as Airbnb, or the like. The sharing servers 20 provide sharing services on the user terminals 30 as Web applications or smartphone applications.

The user terminals 30 are information processing terminals used by users who use sharing services. For example, it is possible to realize the user terminals 30 by personal computers, tablet terminals, smartphones, or the like. In this regard, the users of sharing services both include service providers who provide the resources to be shared in the sharing services and service users who use the resources. In the user terminals 30, by starting an application of a desired sharing service, the user terminals 30 access the sharing servers 20 that provide the sharing services.

The linkage control apparatus 10 links a plurality of sharing services together and provides a service user with a matching result corresponding to service condition specified by the service user. The matching result includes information as to whether or not it is possible to provide the resources corresponding to the condition and also includes the information on the resources if it is possible.

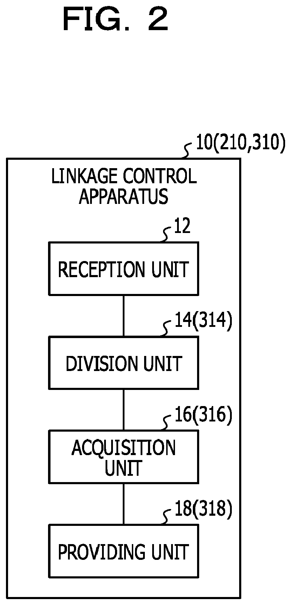

As illustrated in FIG. 2, the linkage control apparatus 10 functionally includes a reception unit 12, a division unit 14, an acquisition unit 16, and a providing unit 18.

The reception unit 12 receives a service condition from a service user via the user terminal 30. The service condition is a condition, such as the attributes of the resources that the service user desires to use, or the like. In this embodiment, it is assumed that the service condition includes time information. For example, it is assumed that the service user desires to use the sharing services of a ride share in which matching is performed between service providers who are owners (drivers) of automobiles and service users who want to use the automobiles as a transportation mechanism. In this case, as the service condition, a departure place, a destination, departure time, and the like are specified. In this regard, the departure time is an example of time information. The reception unit 12 transfers the received service condition to the division unit 14.

The division unit 14 divides the service condition transferred from the reception unit 12 into a plurality of conditions. Hereinafter each of the divided conditions is referred to as a "divided condition". Specifically, in this embodiment, the division unit 14 divides the service condition into a plurality of divided conditions in the time axis direction based on the time information included in the service condition. Dividing the conditions in the time axis direction refers to dividing the conditions such that the time information included in each of the divided conditions do not overlap with each other.

For example, in the case of a service condition of the ride share described above, the division unit 14 searches for a route from the departure place to the destination and divides the route into a plurality of parts for each predetermined point. It is possible to use a previously known method for searching for a route. It is also possible to determine the predetermined point to be each point where the scheduled time of arrival becomes predetermined time intervals with the departure time as a reference. Also, the division unit 14 may divide the route by each point having a predetermined distance from the departure place, by service areas on a highway, by a point where a major landmark, or the like is located.

It is possible to change the granularity of division, such as the above-described predetermined time or predetermined distance, or the like in accordance with at least one of the type of target sharing services, a use area, and a use time slot. For example, in the case of a ride share, it is assumed that there is high locality in the providing area of the services by service providers (drivers of the automobile). For example, the providing area is related to the living area of the service providers. Accordingly, the possibility of the existence of the resources that match the service condition becomes higher in the case of matching on the condition of connecting short-distance moves up to the destination than in the case of matching on the condition of moving a long-distance move.

Thus, when the type of sharing services is a ride share, it is possible to set the granularity of division of the service condition to fine. Also, it is assumed that there are more service providers who support a long-distance move in a rural area than in an inner-city area. Thus, when the use area specified by the service condition is in a rural area, the granularity of division may be coarser than in the case where the use area is in an inner-city area. Also, the granularity of division may be changed depending on whether the use route is a highway or a local road, or whether the time slot is in the daytime or at night, or the like. Also, the divided conditions that are produced by dividing one service condition may have different granularities.

The divided condition includes the same specification as the service condition specified by the service user. For example, the divided condition produced by dividing the service condition includes the specification of a departure place, a destination, departure time, and the like. The departure place and the destination of the divided condition is a point produced by dividing the service condition, and the departure time is the scheduled time of arrival to that point. The division unit 14 transfers each divided condition to the acquisition unit 16.

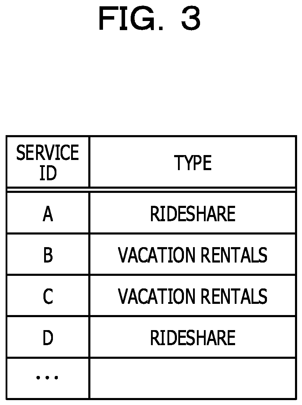

The acquisition unit 16 selects sharing services to which the individual divided conditions are transmitted. For example, as illustrated in FIG. 3, the acquisition unit 16 holds a table in which identification information of a sharing service is associated with a type of the sharing service. In the example in FIG. 3, as the identification information of the sharing service, a service ID is used. In the following, the sharing service having a service ID = X is referred to as "sharing service X". The acquisition unit 16 refers to this table and selects a sharing service of the type corresponding to the service condition. If there are a plurality of target sharing services, all of them or a plurality of sharing services among them may be selected.

The acquisition unit 16 transmits each of the divided conditions to the sharing servers 20 that provide the selected sharing services. In this regard, the divided condition to be transmitted to each of the sharing services may be all the divided conditions corresponding to the overall service condition or may be a part of the divided conditions. For example, if there is a sharing service whose providing area of the service is limited, it is possible to transmit only the divided condition including the specification corresponding to that area to the sharing service.

Also, the acquisition unit 16 receives a matching result from each of the sharing services to which a corresponding divided condition has been transmitted. As described above, a matching result includes information as to whether or not it is possible to provide the resources corresponding to the divided condition and the information on the resources that are providable if it is possible to provide the resources. For example, it is possible to use a resource list including providable resources and the attributes of the resources for the information on the providable resources as a matching result. The acquisition unit 16 transfers each matching result obtained for each divided condition to the providing unit 18.

In this regard, the sharing services are provided with Application Programming Interface (API) for exchanging information between the acquisition unit 16 and the sharing services. The API serves for receiving a divided condition and outputting a matching result. Using the API, information ought to be exchanged between the acquisition unit 16 and the sharing services.

The providing unit 18 aggregates the resource list included in the matching result transferred from the acquisition unit 16 for each divided condition and rearranges the information of the individual resources included in the resource list in accordance with any of the attributes. For example, it is possible for the providing unit 18 to rearrange the information of the resources in ascending order of the amount of money for use or in descending order of the evaluations of the service providers. The providing unit 18 returns all the resource lists for each of the rearranged divided conditions all together to the user terminal 30 that is used by the service user as a matching result corresponding to the initial service condition.

In this regard, it is assumed that the matching result corresponding to any one of the divided conditions includes a matching result when it is not possible to provide a service corresponding to the divided condition. Hereinafter the matching result in this case is referred to as "no matching". In this case, the providing unit 18 returns the matching result indicating "no matching" to the service user as the matching result corresponding to the divided condition. Also, the providing unit 18 may notify the division unit 14 of the divided condition that has brought about the matching result of no matching, instruct to change the granularity of division for a part of or all of the service condition including the corresponding part, and then perform redivision. If the division unit 14 has performed redivision, the acquisition unit 16 and the providing unit 18 perform processing on the redivided conditions once again.

Also, when the providing unit 18 receives, from a service user, an instruction to select any one of the resources from the resource list corresponding to each divided condition, the providing unit 18 transmits a reservation instruction for the resource to the sharing service that provides the resource.

Thereby, it is possible for the service user to obtain matching results corresponding to the overall service condition specified at the beginning without being conscious of each of the sharing services to which the individual divided conditions have been transmitted.

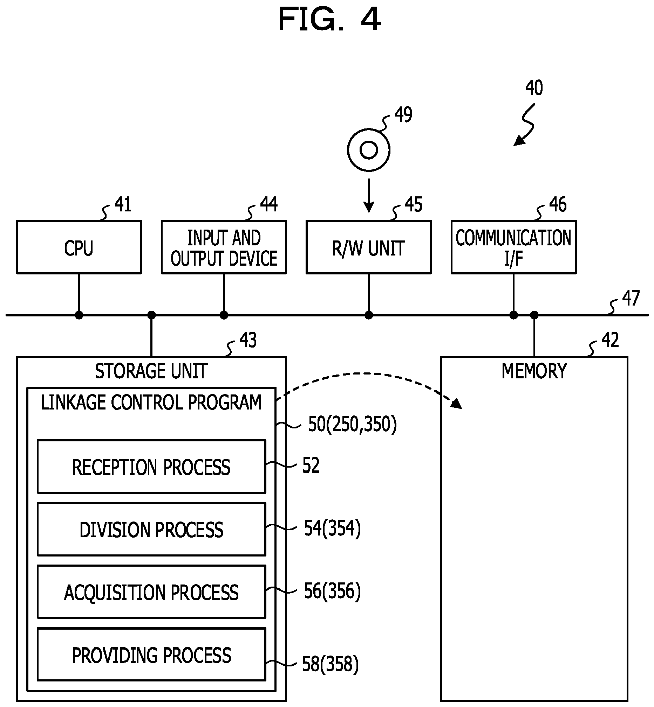

It is possible to realize the linkage control apparatus 10 by a computer 40 illustrated in FIG. 4, for example. The computer 40 includes a central processing unit (CPU) 41, a memory 42 as a temporary storage area, and a nonvolatile storage unit 43. Also, the computer 40 includes an input and output device 44, a read/write (R/W) unit 45 that controls reading data from and writing data to a storage medium 49, and a communication interface (I/F) 46 that is coupled to a network, such as the Internet, or the like. The CPU 41, the memory 42, the storage unit 43, the input and output device 44, the R/W unit 45, and the communication I/F 46 are coupled with one another via a bus 47.

It is possible to realize the storage unit 43 by a hard disk drive (HDD), a solid state drive (SSD), a flash memory, or the like. The storage unit 43 stores, as a storage medium, a linkage control program 50 for causing the computer 40 to function as linkage control apparatus 10. The linkage control program 50 includes a reception process 52, a division process 54, an acquisition process 56, and a providing process 58.

The CPU 41 reads the linkage control program 50 from the storage unit 43, loads the program into the memory 42, and executes the processes of the linkage control program 50 in sequence. The CPU 41 executes the reception process 52 so as to operate as the reception unit 12 illustrated in FIG. 2. Also, the CPU 41 executes the division process 54 so as to operate as the division unit 14 illustrated in FIG. 2. Also, the CPU 41 executes the acquisition process 56 so as to operate as the acquisition unit 16 illustrated in FIG. 2. Also, the CPU 41 executes the providing process 58 so as to operate as the providing unit 18 illustrated in FIG. 2. Thereby, the computer 40 that has executed the linkage control program 50 functions as the linkage control apparatus 10.

In this regard, it is possible to realize the functions of the linkage control program 50 by, for example, a semiconductor integrated circuit, more specifically an application specific integrated circuit (ASIC), or the like.

Next, a description will be given of the operation of the linkage control system 100 according to the first embodiment.

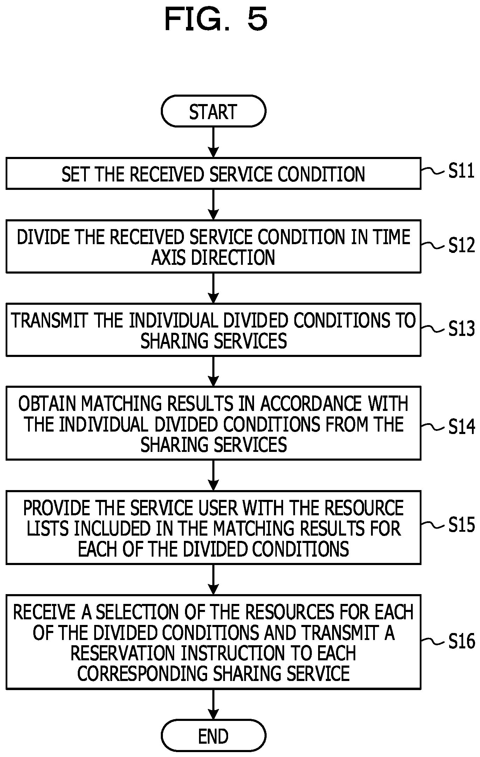

When the reception unit 12 of the linkage control apparatus 10 receives a service condition from a service user via a user terminal 30, the linkage control apparatus 10 performs the linkage control processing illustrated in FIG. 5. Here, it is assumed that the service condition in which a ride share from HANEDA to HAKONE is desired with a departure time of 9:00 has been received.

In step S11, the reception unit 12, for example, sets the received service condition in a predetermined format as illustrated below and transfers the information to the division unit 14.
From = HANEDA
To = HAKONE
departure time = 9:00

Next, in step S12, the division unit 14 divides the service condition received from the reception unit 12 into a plurality of divided conditions. The division unit 14 then transfers each of the divided conditions to the acquisition unit 16. Here, for example, a description will be given of the case of dividing into three divided conditions as described below.

### Divided condition 1:

From = HANEDA
To = SHINJUKU
departure time = 9:00
divided condition 2:
From = SHINJUKU
To = ODAWARA
departure time = 10:00
divided condition 3:
From = ODAWARA
To = HAKONE
departure time = 12:00

Next, in step S13, the acquisition unit 16 selects a sharing service to which each of the divided conditions is transmitted. For example, the acquisition unit 16 refers to the table as illustrated in FIG. 3 and identifies that the sharing services of a ride share are sharing services A and D. The acquisition unit 16 may select either sharing service A or sharing service D as the transmission destination of the divided condition, or may select both of the sharing services. Also, the sharing service of the transmission destination may differ for each divided condition. For example, the acquisition unit 16 may select sharing service A as the transmission destination of divided condition 1 and may select sharing service D as the transmission destination of the divided conditions 2 and 3. The acquisition unit 16 transmits each of the divided conditions to the sharing server 20 that provides the selected sharing service.

Next, in step S14, the acquisition unit 16 obtains a matching result including a resource list from each of the sharing services to which each divided condition has been transmitted. The acquisition unit 16 transfers each of the matching results for each of the obtained divided conditions to the providing unit 18.

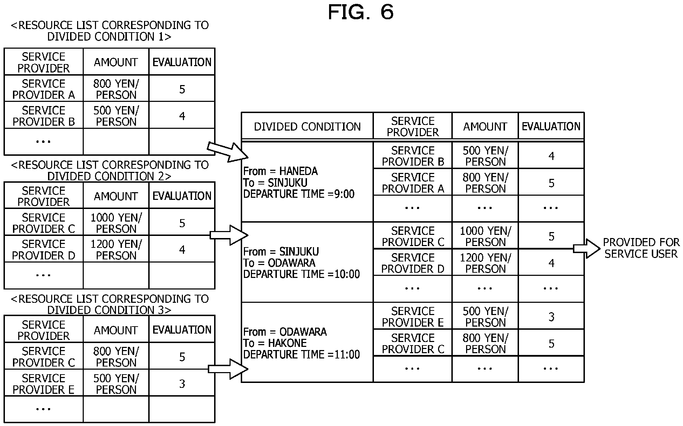

Next, in step S15, for example, as illustrated in the left diagrams in FIG. 6, the providing unit 18 aggregates the resource lists included in the matching results for each divided condition transferred from the acquisition unit 16 for each divided condition. Also, as illustrated in the right diagram in FIG. 6, the providing unit 18 rearranges the information of each of the resources included in the resource list for each divided condition in accordance with any one of the attributes. The providing unit 18 then provides the user terminal 30 used by the service user with all the resource lists for each rearranged divided condition as a matching result corresponding to the overall service condition all together.

Next, in step S16, the providing unit 18 receives an instruction for selecting any one of the resources from the resource list corresponding to each divided condition from the service user. The providing unit 18 then transmits reservation instructions of the resources to the sharing services that provide the selected resources, and the linkage control processing is terminated.

As described above, the linkage control apparatus according to the first embodiment divides the service condition specified by a service user into a plurality of divided conditions in the time axis direction and transmits the individual divided conditions to one or a plurality of sharing services. Thereby, it is possible to link a plurality of sharing services and to provide services corresponding to the service condition specified by the service user.

### Second embodiment

Next, a description will be given of a second embodiment. In this regard, in a linkage control system according to the second embodiment, the same reference symbol is given to the same part as that in the linkage control system 100 according to the first embodiment, and the detailed description thereof will be omitted.

As illustrated in FIG. 1, a linkage control system 200 according to the second embodiment includes a linkage control apparatus 210, a plurality of sharing servers 20, and a plurality of user terminals 30.

As illustrated in FIG. 2, the linkage control apparatus 210 functionally includes the reception unit 12, the division unit 14, an acquisition unit 216, and a providing unit 218.

The acquisition unit 216 transmits each of the divided conditions to the selected sharing servers and obtains matching results in the same manner as the acquisition unit 16 according to the first embodiment. At this time, the acquisition unit 216 according to the second embodiment obtains matching results for each divided condition in sequence in accordance with time information included in the divided conditions. For example, if a start time is included in the divided conditions, the acquisition unit 216 transmits the divided condition to the selected sharing servers at a predetermined time before the start time of each divided condition and obtains a matching result.

The providing unit 218 differs from the providing unit 18 according to the first embodiment in the point that each time a matching result for each divided condition is transferred from the acquisition unit 216, the providing unit 218 aggregates and rearranges a resource list and provides the service user with the resource list.

It is possible to realize the linkage control apparatus 210 by the computer 40 illustrated in FIG. 4, for example. The storage unit 43 of the computer 40 stores a linkage control program 250 that causes the computer 40 to function as the linkage control apparatus 210. The linkage control program 250 includes the reception process 52, the division process 54, an acquisition process 256, and a providing process 258.

The CPU 41 reads the linkage control program 250 from the storage unit 43, loads the program into the memory 42, and executes the processes of the linkage control program 250 in sequence. The CPU 41 executes the acquisition process 256 so as to operate as the acquisition unit 216 illustrated in FIG. 2. Also, the CPU 41 executes the providing process 258 so as to operate as the providing unit 218 illustrated in FIG. 2. The other processes are the same as those of the linkage control program 50 according to the first embodiment. Thereby, the computer 40 that has executed the linkage control program 250 functions as the linkage control apparatus 210.

In this regard, it is possible to realize the functions realized by the linkage control program 250 by, for example, a semiconductor integrated circuit, more specifically an ASIC, or the like.

Next, a description will be given of the operation of the linkage control system 200 according to the second embodiment.

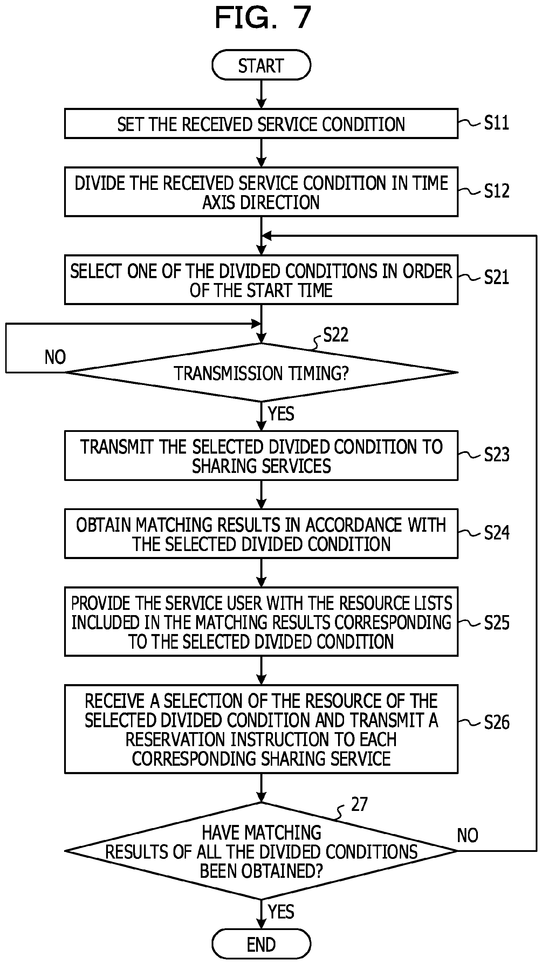

When the reception unit 12 of the linkage control apparatus 210 receives a service condition from a service user via a user terminal 30, the linkage control apparatus 210 performs the linkage control processing illustrated in FIG. 7. In the second embodiment, a description will be given of the case in which the same ride share service as that in the first embodiment is used. In this regard, for the linkage control processing illustrated in FIG. 7, the same reference symbol is given to the same processing as the linkage control processing (FIG. 5) in the first embodiment, and a detailed description will be omitted.

In step S12, the division unit 14 divides the service condition into the divided conditions 1, 2, and 3 described above in the same manner as the first embodiment. The acquisition unit 216 then selects one of the divided conditions in ascending order of the start time included in the individual divided conditions in step S13. Here, first, divided condition 1 is selected.

Next, in step S22, the acquisition unit 216 determines whether or not the time has reached a predetermined transmission timing, such as a predetermined time period before the start time included in the selected divided condition, or the like. If the time has not reached the transmission timing, the determination in step S22 is repeated, whereas if the time has reached the transmission timing, the processing proceeds to step S23.

In step S23, the acquisition unit 216 selects a sharing service to which the selected divided condition is transmitted by, for example, referring to the table as illustrated in FIG. 3, and transmits the selected divided condition to a sharing server 20 that provides the selected sharing service.

Next, in step S24, the acquisition unit 216 obtains a matching result including a resource list from the sharing service to which the selected divided condition has been transmitted. The acquisition unit 216 transfers each matching result for each obtained divided condition to the providing unit 218.

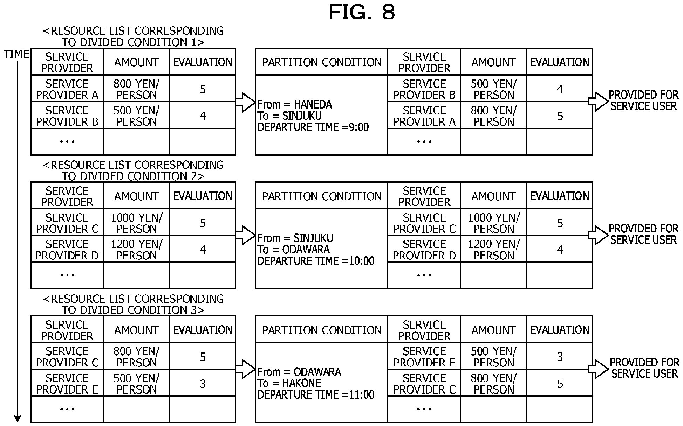

Next, in step S25, for example, as illustrated in the upper left diagram in FIG. 8, the providing unit 218 aggregates the resource lists included in the matching results of the divided condition transferred from the acquisition unit 216. Also, the providing unit 218 rearranges the information of the individual resources included in the resource list of the selected divided condition in accordance with any one of the attributes thereof. As illustrated in the upper right diagram in FIG. 8, the providing unit 218 then provides the user terminal 30 used by the service user with the rearranged resource list.

Next, in step S26, the providing unit 218 receives a selection instruction of any one of the resources from the resource list corresponding to the selected divided condition from the service user. The providing unit 218 then transmits a reservation instruction of the resource to the sharing service that provides the selected resource.

Next, in step S27, the acquisition unit 216 determines whether or not a matching result has been obtained for all the divided conditions. If there is a divided condition from which a matching result has not been obtained, the processing returns to step S21, the acquisition unit 216 selects the next divided condition in ascending order of the start time, and the processing in step S22 to S26 is repeated. On the other hand, if the matching result has been obtained for all the divided conditions, the linkage control processing is terminated.

As described above, in the linkage control apparatus according to the second embodiment, a service condition specified by a service user is divided into a plurality of divided conditions in the time axis direction, and each of the divided conditions is transmitted to one or a plurality of sharing services in sequence according to the time information. Thereby, a plurality of sharing services are linked in the same manner as the first embodiment, and thus it is possible to provide a service corresponding to the service condition specified by the service user.

Also, the matching is performed for each divided condition at a timing in accordance with the time information included in the divided condition, and thus it is possible to provide the information of suitable resources. For example, in the case of a ride share, the effect of riding together in an automobile of a service provider that moves in the same direction by chance is included. Thereby there is a higher possibility of performing efficient matching for both a service user and a service provider in the case where matching is performed at a timing close to the use start time as in the present embodiment than in the case of reserving the resource by specifying a use time in advance.

### Third embodiment

Next, a description will be given of a third embodiment. In the first and second embodiments, descriptions have been given of the case of dividing a service condition in the time axis direction. However, in the third embodiment, a description will be given of the case of dividing a service condition in accordance with the type of the service. In this regard, regarding a linkage control system according to the third embodiment, the same reference symbol is given to the same part as that of the linkage control system 100 according to the first embodiment and a detailed description thereof will be omitted.

As illustrated in FIG. 1, a linkage control system 300 according to the third embodiment includes a linkage control apparatus 310, a plurality of sharing servers 20, and a plurality of user terminals 30.

As illustrated in FIG. 2, the linkage control apparatus 310 functionally includes the reception unit 12, a division unit 314, the acquisition unit 16, and the providing unit 18.

The division unit 314 divides the service condition transferred from the reception unit 12 into a plurality of divided conditions based on the type of the sharing service corresponding to each item specified in the service condition. For example, in the case of a service condition in which use of a ride share from a departure place to a destination and use of vacation rentals at the destination are specified, the division unit 314 divides the service condition into a part of using a ride share and a part of using vacation rentals.

It is possible to realize the linkage control apparatus 310 by, for example, the computer 40 illustrated in FIG. 4. The storage unit 43 of the computer 40 stores a linkage control program 350 for causing the computer 40 to function as the linkage control apparatus 310. The linkage control program 350 includes the reception process 52, a division process 354, the acquisition process 56, and the providing process 58.

The CPU 41 reads the linkage control program 350 from the storage unit 43 and loads the program into the memory 42, and executes the processes of the linkage control program 350 in sequence. The CPU 41 executes the division process 354 so as to operate as the division unit 314 illustrated in FIG. 2. The other processes are the same as those in the linkage control program 50 according to the first embodiment. Thereby, the computer 40 that has executed the linkage control program 350 functions as the linkage control apparatus 310.

In this regard, it is possible to realize the functions realized by the linkage control program 350 by, for example, a semiconductor integrated circuit, more specifically an ASIC, or the like.

Next, a description will be given of the operation of the linkage control system 300 according to the third embodiment.

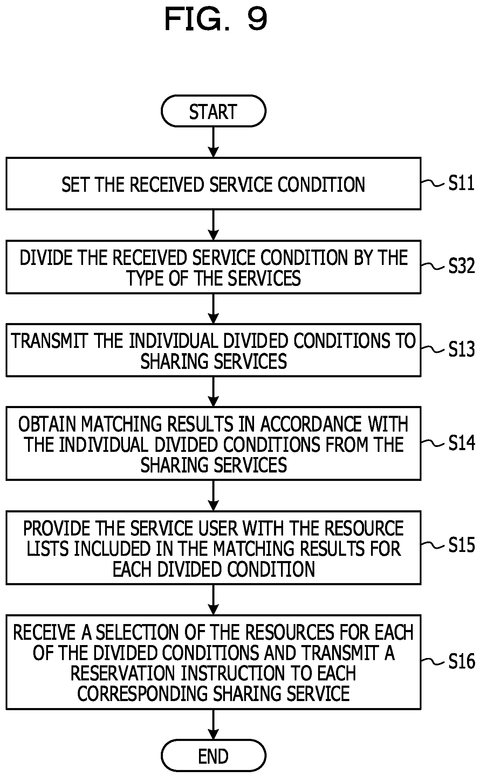

When the reception unit 12 of the linkage control apparatus 310 receives a service condition transmitted via a user terminal 30 of a service user, the linkage control apparatus 310 performs linkage control processing illustrated in FIG. 9. In this regard, about the linkage control processing illustrated in FIG. 9, the same reference symbol is given to the same processing as that of the linkage control processing (FIG. 5) in first embodiment, and a detailed description thereof will be omitted. Here, it is assumed that the service condition described below has been received.
10/1 OSAKA, accommodation, one person
10/2 OSAKA → SHIZUOKA, departure at 18:00
10/2 SHIZUOKA, accommodation, one person
10/3 SHIZUOKA → YOKOHAMA, departure at 12:00
10/3 YOKOHAMA, accommodation, one person

In step S32, the division unit 314 divides the service condition transferred from the reception unit 12 into a plurality of divided conditions based on the type of the sharing services corresponding to the individual items specified by the service condition. The division unit 314 then transfers the individual divided conditions to the acquisition unit 16. Here, for example, the service condition is divided into the divided conditions for vacation rentals and the divided conditions for ride shares as described below.

### Divided conditions for vacation rentals:

10/1 OSAKA, accommodation, one person
10/2 SHIZUOKA, accommodation, one person
10/3 YOKOHAMA, accommodation, one person

### Divided conditions for ride shares:

10/2 OSAKA → SHIZUOKA, departure at 18:00
10/3 SHIZUOKA → YOKOHAMA, departure at 12:00

Next, in step S13, the acquisition unit 16 refers to, for example, the table as illustrated in FIG. 3 and selects sharing services to which the individual divided conditions are transmitted. For example, it is possible for the acquisition unit 16 to select either sharing service B or C, or both sharing services B and C as the sharing services to which the divided conditions for vacation rentals are transmitted. In the same manner, it is possible for the acquisition unit 16 to select either sharing service A or D, or both sharing services A and D as the sharing services to which the divided conditions for ride shares are transmitted. The acquisition unit 16 transmits each of the divided conditions to the sharing servers 20 that provide the selected sharing services.

In the following, in steps S14 to S15, in the same manner as the first embodiment, matching results returned from the individual sharing services are obtained and provided for the service user.

As described above, in the linkage control apparatus according to the third embodiment, a service condition specified by a service user is divided into a plurality of divided conditions in accordance with the type of the service. The individual divided conditions are transmitted to one or a plurality of sharing services that provide the services corresponding to the divided conditions. Thereby, it is possible to link a plurality of sharing services of different types and to provide the service user with the services corresponding to the service condition specified by the service user.

Also, it is possible for a service user to make reservations for a plurality of resources regarding one event, for example, a travel, or the like without demanding time and effort for specifying service conditions for different sharing services in accordance with the type of the services.

In this regard, in the second embodiment, a description has been given of the case of combining ride shares and vacation rentals as an example of combined service conditions of services having different types. However, the present disclosure is not limited to this. For example, it is possible to apply the present disclosure to a combination of sharing services of various types, such as a combination of ride shares and lending of camping equipment, and the like, a combination of lending of conference rooms and lending of equipment, such as a projector, or the like. Also, the number of types of sharing services is not limited to two and may be three or more.

Also, the first embodiment and the second embodiment may be combined, and division in a time direction based on the time information included in the service condition and division in accordance with the type of the service may be combined.

Also, in the above, the descriptions have been given of the mode in which the linkage control program 50, 250, or 350 is stored (installed) in the storage unit 43 in advance. However, the present disclosure is not limited to this. It is possible to provide the program in the form of being stored in a storage medium, such as a CD-ROM, a DVD-ROM, a USB memory, or the like.

### REFERENCE SIGNS LIST

10, 210, 310 a linkage control apparatus
14, 314 a division unit
16, 216 an acquisition unit
18, 218 a providing unit
20 a sharing server
30 a user terminal
40 a computer
41 a CPU
42 a memory
43 a storage unit
44 an input and output device
49 a storage medium
50, 250, 350 a linkage control program
100, 200, 300 a linkage control system

## Claims

1. A method, executed by a computer, for gathering information, the method comprising:
receiving a request for a service, the request including a required condition for the service;
dividing the required condition into a plurality of divided conditions;
specifying a first service provider from among a plurality of service providers, the first service provider providing a first service for which a first divided condition included in the plurality of divided conditions is required;
transmitting the first divided condition to a first device of the first service provider; and
receiving first information regarding a response to the first divided condition from the first device.

2. The method according to claim 1, the method further comprising:
outputting first information to a user terminal which has transmits the request.

3. The method according to claim 1, wherein the dividing is executed based on time information and area information included in the condition.

4. The method according to claim 1,
wherein the transmitting includes transmitting a second divided condition to the first device, the second divided condition being included in the plurality of divided conditions, and
wherein the receiving includes receiving the first information and second information simultaneously, the second information regarding a response to the second divided condition from the first terminal.

5. The method according to claim 1,
wherein the transmitting includes transmitting a second divided condition to the first device, the second divided condition being included in the plurality of divided conditions, and
wherein the receiving includes receiving the first information at first time and receiving the second information at second time from the first terminal, the second information regarding a response to the second divided condition, the first time corresponding to first time information included in the first divided condition, the second time corresponding to second time information included in the second divided condition.

6. The method according to claim 1, wherein the dividing is executed based on a rule determined in accordance with at least one of a type of the service, a service area, and a service time slot.

7. The method according to claim 1, wherein the transmitting includes transmitting a second divided condition to a second device of the second service provider, the divided second condition being included in the plurality of divided conditions, the second service provider providing a second service for which the second divided condition is required, a type of the first divided condition being different from a type of the second divided condition.

8. The method according to claim 2,
wherein the transmitting includes transmitting a second divided condition to the first device and transmitting the first divided condition and the second divided condition to a second device of a second service provider, the second divided condition being included in the plurality of divided conditions,
wherein the receiving includes receiving the first information regarding responses to the first divided condition and the second divided condition from the first terminal and receiving second information regarding response to the first divided condition and the second divided condition from the second terminal, and
wherein the outputting includes,
arranging the first information and the second information based on each charge of service or each evaluation of the first service provider and the second provider, and
outputting the arranged first information and the arranged second information to the user terminal.

9. A device for gathering information, the device comprising:
a processing unit configured to:
receive a request for a service, the request including a required condition for the service;
divide the required condition into a plurality of divided conditions;
specify a first service provider from among a plurality of service providers, the first service provider providing a first service for which a first divided condition included in the plurality of divided conditions is required;
transmit the first divided condition to a first device of the first service provider; and
receive first information regarding a response to the first divided condition from the first device.

10. A program, for gathering information, that causes a computer execute operations comprising:
receiving a request for a service, the request including a required condition for the service;
dividing the required condition into a plurality of divided conditions;
for each divided condition of plurality of divided conditions, specifying, from among a plurality of service providers, a service provider providing a service for which the divided condition is required;
transmitting the divided condition to a device of the specified service provider; and
receiving information regarding a response to the divided condition from the device.
